# EUROPEAN PATENT APPLICATION

(11) **EP 1 069 748 A1**
(43) Date of publication of application: **17.01.2001**
(21) Application number: 99113490.9
(22) Date of filing: 13.07.1999
(51) Int. Cl.: H04M 1/274

(54) **A method for managing memory allocation in phone systems**

(71) Applicant: SIEMENS AKTIENGESELLSCHAFT, 80333 München (DE)
(72) Inventor: Laure,Richard, F-9000 Aalborg (DE)

(57) **Abstract**

The present invention provides a method for managing memory allocation in phone systems having at least one memory means and a display means, particularly digital mobile phone systems, comprising the steps of reserving memory space for an entity having a plurality of entries, particularly an address/phone book or a group list or an access list, in said memory means, wherein the amount of memory per entry is variable such that when entering an entry only the corresponding necessary memory space is occupied.

## Description

### BACKGROUND OF THE INVENTION

The present invention relates to a method for managing memory allocation in phone systems having at least one memory means and a display means, particularly digital mobile phone systems.

Although applicable to any phone system, the present invention and its underlying problems will be discussed with particular reference to GSM mobile phone systems.

In the following, the definitions listed in the table below are used:

| | |
|---|---|
| Entry | number or notes. Stored information like in an address book or a phone book. Entries have a different format depending on their association to f.e. the internal memory or the SIM card or other memory. For a phone book ist consists of aa alpha-tag and a number. For an address book it comprises more information like e-mail address, fax number or notes |
| Address book | Storage of entries in the internal memory of the handset |
| SIM card | Subscriber Identity Module. Can be used to store phone book entries, which comprise a alpha-tag and a number. |
| Group/Category | A group contains entries that can be linked by a common theme like Work, Friends or Bosch. It is then possible to associate certain functionalities to those groups, like a special ringing tone. It is used to organize entries. |
| Access List | It regroups entries like a directory for files and is used to determine which calls will be allowed to the handset. |
| ADN | Abbreviated Dialling Numbers |
| FDN | Fixed Dialling Numbers |

### DEFINITIONS TABLE

Digital Cellular Telecommunications system (Phase 2+), Specification of the Subscriber Identity Module - Mobile Equipment (SIM - ME) Interface (GSM 11.11 version 6.1.0 Release 1997) inter alia discloses the way information is permanently stored in digital mobile phones.

Until now, one type of mobile phones only had a possibility to store phone numbers on the SIM card. It is possible to access a corresponding list of the numbers contained in each phone book as well as have a quick access to the numbers contained in the active list of numbers (ADN or FDN).

Other type of mobile phones can store numbers in the internal memory of the handset and on the SIM card. It is possible to regroup entries from the internal memory or the SIM card in groups/categories.

Another particular type of mobile phones can store numbers on the SIM card and more information in the internal memory (name, number home, number at work, mobile number, address, etc.). It is not possible to create directly entries on the SIM card. They have first to be created in the internal memory and then copied to the SIM card. It not possible to create groups/categories with entries from SIM and entries from the internal memory. Entries from the SIM card have to be copied in the internal memory to be attached to a group.

The status information is designed for mobile phones to display the amount of entries available. Until now, the status was mostly used for the phone book. Because a fixed amount of memory was reserved for each entry, it was possible to divide the memory available into entries. Therefore, the amount of memory used was evaluated in number of entries created:
100 available
60 used

It also means that even though a phone number was not included in an entry, the same amount of memory was reserved and could not be used for another entry.

### SUMMARY OF THE INVENTION

The present invention provides a method for managing information stored in phone systems, particularly digital mobile phone systems as defined in claim 1.

A particular advantage of the invention is that the user gets a status concerning the groups, the access lists and the address book (entries saved in the internal memory), even though no specific space is reserved for each information. The fact that the user can store more or less information gives more flexibility through a better use of the memory. It is especially important if, like in the address book, it is possible to store a lot of different information. Not all this information has to be entered and if it is not, it gives more space for other entries.

The principal idea underlying the present invention is to reserve memory for the whole phone book or address book, but the amount of memory per entry is not fixed. It means that it is possible to create many small entries or less big entries. The user is then informed of the status evaluating the amount of memory left, f.e. in percentage. At the same time the number of entries is displayed.

Furthermore, this status may be used for other functionalities: the groups and the caller access. Both of them use memory, whose amount must be limited. But the number of groups or access lists is not fixed. It depends on the amount of entries or groups attached to groups or access lists. For example, it is possible to have a few groups with a lot of entries or a lot of groups with a few entries.

Preferred embodiments of the present invention are listed in the dependent claims.

According to a preferred embodiment said memory means comprise a SIM card having a phone book and an internal memory chip having an address book.

According to a further preferred embodiment a measure, preferably the percentage, of the occupied and/or available memory space is displayed on said display means.

According to a further preferred embodiment a measure, preferably the percentage, of the occupied and/or available number of entries is display on said display means.

### BRIEF DESCRIPTION OF THE DRAWINGS

The present invention will become more fully understood by the following detailed description of preferred embodiments thereof in conjunction with the accompaying drawings, in which:
- Fig. 1: shows an example of a display list of the status of groups according to an embodiment of the invention;
- Fig. 2: shows an example of a display list of the status of access lists according to an embodiment of the invention; and
- Fig. 3: shows an example of a display list of the status of an address book according to an embodiment of the invention.

### DESCRIPTION OF THE PREFERRED EMBODIMENTS

In the figures, the same reference signs denote the same or equivalent elements.

In particular, 10 denotes adisplay means; 101-104 and 201-204 and 301-303 display lines on the display screen; and 150 a command line on the display screen.

The address book according to this example can contain the following information:
· Name
· Home number
· Office number
· Mobile number
· Fax number
· Address
· Data number
· Email address
· Birthday
· Notes

But the only information that has to be filled in is a name and any other information. This means that the rest is optional. If not all possible information is filled in and the space reserved for each entry in memory is fixed, a lot of place would lost. Therefore, it is better to use only the memory necessary for the information contained in the entry in order to have place for more entries.

The entries of the address book created in this way can be used to define groups such as friends, business partners, family etc. Moreover, groups can also contain SIM card entries or the like.

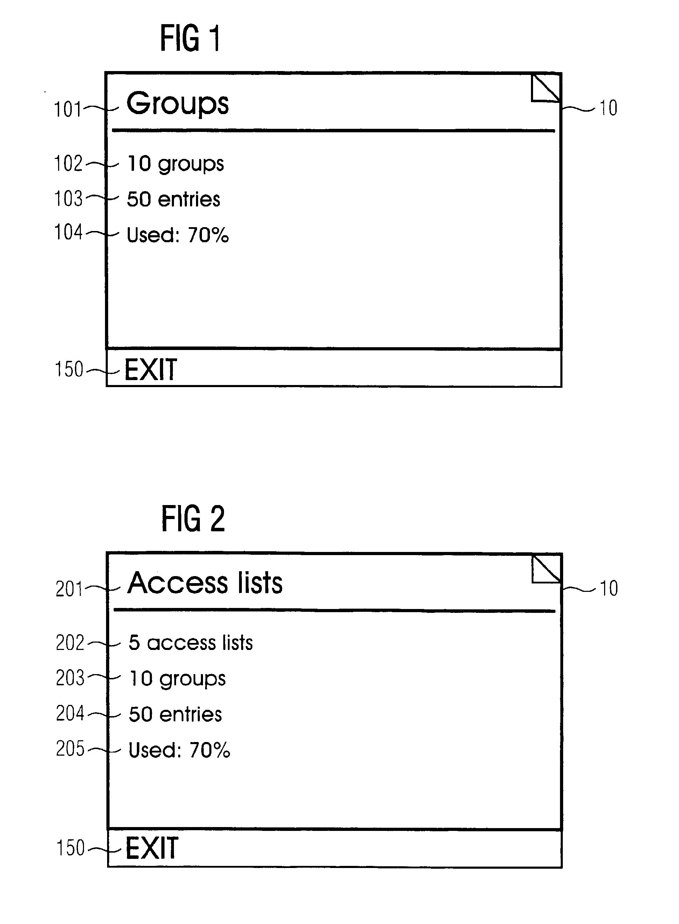

Fig. 1 shows an example of a display list of the status of groups according to an embodiment of the invention.

In this example, the user has defined 10 groups with 50 entries in total, and has used 70% percent of the memory reserved.

Fig. 2 shows an example of a display list of the status of access lists according to an embodiment of the invention.

In this example, the user has defined 5 access lists with 10 groups and 50 entries in total, and has used 70% percent of the memory reserved.

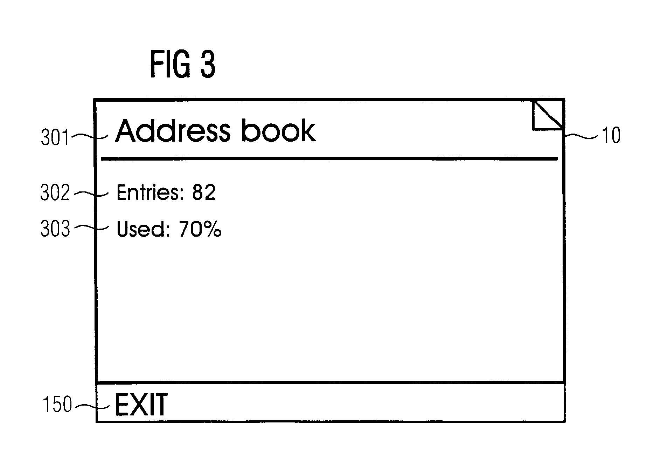

Fig. 3 shows an example of a display list of the status of an address book according to an embodiment of the invention.

In this example, the user has defined 82 entries, and has used 70% percent of the memory reserved.

As becomes readily apparent, to get the status concerning these entries of the address book, the number of entries is not anymore relevant in itself. Therefore, the amount of memory used is expressed in a relative measure, here as percentage.

The same idea is used for the groups and the access list except that what is not fixed is the number of entries in a group and an access list as well as the number of groups in an access list. The status will also be displayed in percentage.

Although the present invention has been described with respect to preferred embodiments thereof, it should be understood that many modifications can be performed without departing from the scope of the invention as defined by the appended claims.

Particularly, the kind and amount of information stored in the memory or memories is not limited to the shown example.

Moreover, although the disclosed memory allocation scheme is a functionality designed for mobile phones, the invention is applicable to stationary phones as well.

Finally, the arrangement and levels of the display may be altered in many ways, f.e. instead of percentage an analog measure may be given.

## Claims

1. A method for managing memory allocation in phone systems having at least one memory means and a display means, particularly digital mobile phone systems, comprising the steps of reserving memory space for an entity having a plurality of entries, particularly an address/phone book or a group list or an access list, in said memory means, wherein the amount of memory per entry is variable such that when entering an entry only the corresponding necessary memory space is occupied.

2. The method according to claim 1, wherein said at least two different memory means comprise a SIM card having a phone book and an internal memory chip having an address book.

3. The method according to claim 1 or 2, wherein a measure, preferably the percentage, of the occupied and/or available memory space is display on said display means.

4. The method according to claim 1 or 2, wherein a measure, preferably the percentage, of the occupied and/or available number of entries is display on said display means.
